# EUROPÄISCHE PATENTSCHRIFT

(11) **EP 1 613 521 B1**
(45) Veröffentlichungstag und Bekanntmachung des Hinweises auf die Patenterteilung: **26.11.2008**
(21) Anmeldenummer: 04722227.8
(22) Anmeldetag: 22.03.2004
(51) Int. Cl.: B62D 1/04

(54) **LENKRAD FÜR KRAFTFAHRZEUGE**
STEERING WHEEL FOR MOTOR VEHICLES
VOLANT D'AUTOMOBILE

(30) Priorität: 04.04.2003 DE 10316738; 06.11.2003 DE 10352733
(43) Veröffentlichungstag der Anmeldung: 11.01.2006
(73) Patentinhaber: Takata-Petri AG, 63743 Aschaffenburg (DE)
(72) Erfinder: MEISSNER, Dirk, 13467 Berlin (DE)
(74) Vertreter: Baumgärtel, Gunnar
(86) Internationale Anmeldenummer: PCT/DE2004/000627
(87) Internationale Veröffentlichungsnummer: WO 2004/091994

(56) Entgegenhaltungen:
- EP-A1- 0 302 193
- EP-A1- 1 275 550
- DE-A1- 10 113 493
- DE-A1- 19 604 351
- DE-U- 20 014 731
- FR-A1- 2 744 976
- US-B1- 6 474 688

## Beschreibung

Die Erfindung betrifft ein Lenkrad für Kraftfahrzeuge.

Es sind Lenkräder von Kraftfahrzeugen bekannt, die neben einem Airbag auch Schalter oder Taster aufweisen, mit denen es z.B. möglich ist, eine Sendereinstellung am Radio vorzunehmen oder auch dessen Lautstärke einzustellen, ohne das in der Regel seitwärts vom Fahrer in der Armaturentafel angebrachte Radio selbst zu bedienen und ohne dadurch vom Straßenverkehr abgelenkt zu werden.

Die zunehmende Komplexität des Straßenverkehrs erfordert zunehmende Fahrerinformationen über seine Umgebung. Die Informationsmenge, die an den Fahrzeugfahrer gegeben wird, nimmt deshalb zu. Andererseits ist die Aufnahmefähigkeit des Fahrers für Informationen begrenzt. Der Fahrer muss sich auch auf wesentliche Fahrfunktionen konzentrieren, wobei wegen des zunehmenden Straßenverkehrs auch hierfür eine zunehmende Konzentration erforderlich ist.

In Kraftfahrzeugen werden deshalb zunehmend Fahrer-Assistenzsysteme für die Erfassung von Gefahrensituationen und Fahrerleitsysteme verwendet. Es ist bekannt, den Fahrer durch visuelle Systeme in der Armaturentafel oder durch Audio-Systeme auf Gefahrensituationen aufmerksam zu machen. Die Fahrerleitsysteme sind mit einem Display ausgerüstet, das ebenfalls in der Armaturentafel angeordnet ist. Fahrerassistenzsysteme sind z.B. aus der deutschen Offenlegungsschrift 198 21 163 A1 und aus der europäischen Patentanmeldung 0 640 903 A1 bekannt.

Der Nachteil der visuellen Systeme besteht darin, dass sie abseits vom Fahrer in der Instrumententafel angeordnet sind, so dass der Fahrer insbesondere beim Betrachten des Displays eines Fahrerleitsystems den Straßenverkehr nicht verfolgen kann.

Es ist auch bereits bekannt, in einem Lenkrad ein Display anzuordnen. So ist aus der Druckschrift DE 200 14 731 U1 ein Lenkrad bekannt, bei dem in dessen Schaumstoffmaterial ein Display mit LCD-Anzeige oder andere elektrische Anzeigeteile eingebettet sind. Diese Anzeigeteile sind mit entsprechenden Funktionsteilen des Kraftfahrzeuges gekoppelt, z.B. mit der Zündeinrichtung, mit Temperaturmessfühlern, Geschwindigkeitsmessern, Tankanzeigern, Autotelefonen, Handys und Ganganzeigen.

Der Erfindung liegt die Aufgabe zugrunde, Informationen, wie z.B. Informationen eines Fahrerleitsystems oder eines Fahrer-Assistenzsystems, dem Fahrer so zugänglich zu machen, dass er diese leicht wahrnehmen kann, und dass der Fahrer auch Informationen für diese Systeme oder für ein Telefon eingeben kann, ohne die Aufmerksamkeit im Straßenverkehr wesentlich verringern zu müssen.

Erfindungsgemäß wird das gemäß den Merkmalen des Anspruchs 1 erreicht.

Bei einem Lenkrad für Kraftfahrzeuge, wobei das Lenkrad als Kommunikations-Interface für den Fahrer ausgebildet ist, sind erfindungsgemäß für ein Fahrerleitsystem als Anzeigeelemente für die empfohlene Fahrtrichtung Pfeile oder bewegte Punkte vorgesehen. Mittels der Pfeile ist eindeutig eine vorzunehmende Änderung der Fahrtrichtung anzeigbar. Auch mittels der bewegten Punkte ist das möglich, die dann nacheinander beleuchtet werden, so dass der Eindruck entsteht, dass ein Punkt in die vorgesehene Richtung wandert.

Es ist zweckmäßig, dass die Pfeile oder Punkte in Abhängigkeit vom Abstand zum Ort einer Fahrtrichtungsänderung so ansteuerbar sind, dass sie unterschiedlich stark leuchten oder unterschiedliche Farben aufweisen. So kann der Fahrer rechtzeitig auf eine notwendige Fahrtrichtungsänderung hingewiesen werden. Das Erreichen des Ortes der Fahrtrichtungsänderung kann durch eine Ansteuerung erzielt werden, die ein Blinken der Pfeile oder Punkte und/oder eine Änderung ihrer Farbe von grün auf rot auslöst.

Auch für die Anzeige der nächsten noch nicht sichtbaren Verkehrsampel-Information können entsprechende Farbelemente vorgesehen sein, d.h. Elemente in den Farben rot, gelb, grün. Dadurch ist es dem Fahrer möglich, seine Fahrweise wie bei einer bereits sichtbaren Ampel auf die mögliche Stellung der Ampel bei deren Erreichen einzustellen.

Zusätzlich kann eine Ziffernanzeige im Lenkrad vorgesehen sein, die den Zeitraum bis zum nächsten Wechsel der Ampelanzeige angibt, d.h. wann die Ampel z.B. von grün über gelb nach rot wechselt. Eine solche Anordnung ist bei jeder Ampel, d.h. auch bei den vom Fahrer einzusehenden Ampeln für die Einstellung der Fahrweise sinnvoll.

Warnfunktionen sind durch Veränderung der Farben und/oder der Strahlungsintensität der Leuchtelemente und/oder durch Blinken der Leuchtelemente darstellbar. So ist in einer Ausführung vorgesehen, die Verringerung des Abstandes zu einem voraus befindlichen Fahrzeug durch Änderung der Farbe des Leuchtelementes von grün auf rot anzuzeigen. In einer Ausführungsform ist für die Darstellung der Warnfunktion ein streifenförmiges Leuchtelement in der oberen Hälfte des Lenkradkranzes des in Geradeausstellung stehenden Lenkrades vorgesehen.

In einer weiteren Ausführungsform sind Schalter am Lenkrad für die Eingabe von Informationen für das Navigationssystem und deren Anzeige sowie für ein Telefon vorgesehen.

Die Erfindung soll in Ausführungsbeispielen anhand von Zeichnungen erläutert werden. Es zeigen
Fig.**1** die Standardsituation bei Anwendung eines herkömmlichen Fahrerleitsystems;
Fig. **2A****,B** Lenkräder mit leuchtenden Symbolen und Streifen;
Fig. **3** ein Lenkrad mit leuchtenden Punkten;
Fig. **4** die Fahrersituation bei Anwendung eines Fahrerleitsystems mit Anzeige am Lenkrad;
Fig. **5** die Anzeige der nächsten Ampelinformation;
Fig. **6 A-C** unterschiedliche Fahrwegsituationen bei Fahrrichtungsänderung;
Fig. **7 A-C** die Anzeige der Fahrwegsituationen der Figuren 10A-C am Lenkrad;
Fig. **8A****,B** unterschiedliche Fahrwegsituationen in Abhängigkeit von der Fahrtrichtung;
Fig. **9A-C** die Anzeige der Fahrwegsituationen der Figuren 12A,B am Lenkrad;
Fig. **10-10B** ein Lenkrad mit unterschiedlich angeordneten Leuchtelementen;
Fig. **11** ein Lenkrad, bei dem ein alphanumerisches Display und zusätzlich Schalter angeordnet sind.

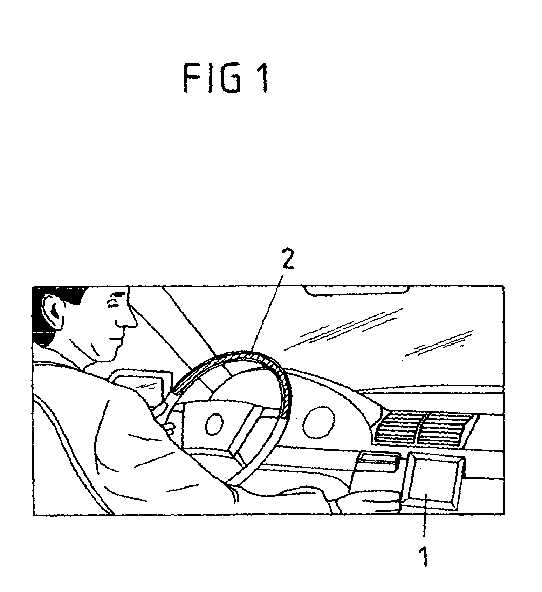

Die Fig. 1 zeigt die Standardsituation bei der Anwendung eines herkömmlichen Fahrerleitsystems. Dieses weist ein Display 1 auf, das seitlich vom Fahrer in der Armaturentafel angeordnet ist. Bei der Betrachtung dieses Displays muss der Fahrer deshalb zwangsläufig seitwärts sehen, so dass er in dieser Zeit den Straßenverkehr nicht verfolgen kann. Das Unfallrisiko steigt dadurch erheblich. Dieser Zustand ist dann besonders kritisch, wenn die Informationsmenge, die an den Fahrer gegeben wird, zukünftig zunimmt. Das Lenkrad in der Fig. 1 weist aber bereits einen beleuchteten Streifen 2 zur Anzeigen von Gefahrensituationen auf.

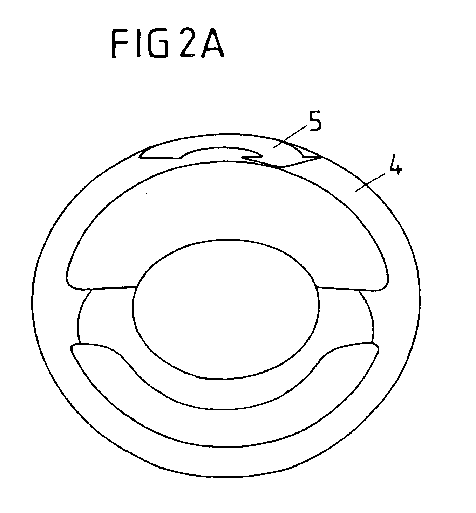

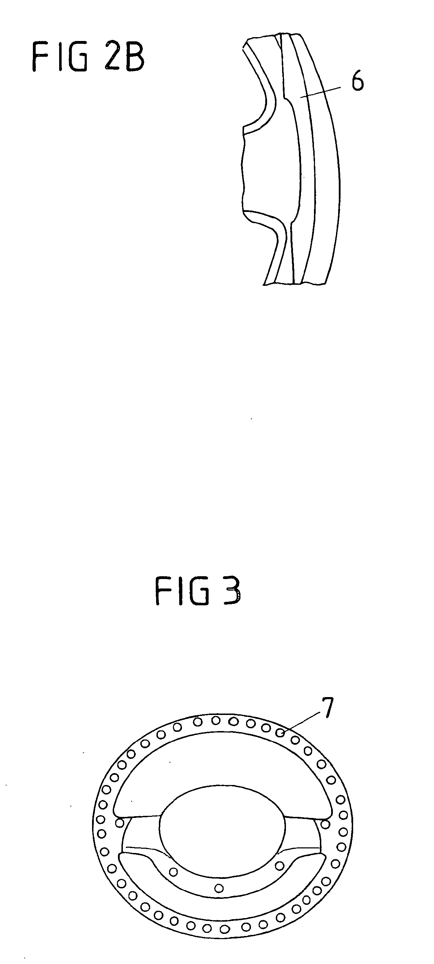

In der Fig. **2A** ist ein Lenkrad dargestellt, bei dem im Lenkradkranz 4 ein leuchtender Pfeil 5 vorgesehen ist, der Teil eines Fahrer-Leit-Systems ist. Es ist hier beispielhaft ein nach rechts weisender Pfeil dargestellt, der dem Fahrer anzeigt, dass er bei der nächsten Gelegenheit nach rechts abbiegen muss. In gleicher Weise kann auch die vorgeschriebene Geradeausfahrt durch einen Streifen 6 (Fig. **2B**) angezeigt werden.

Eine weitere Möglichkeit Fahrtrichtungsänderungen anzuzeigen, besteht in der Anordung beleuchteter Punkte 7 (Fig. **3**). Diese Punkte werden bei notwendiger Fahrtrichtungsänderung so angesteuert, dass sie nacheinander nach rechts oder links beleuchtet werden, d.h. ein nach rechts oder links laufender Punkt sichtbar ist.

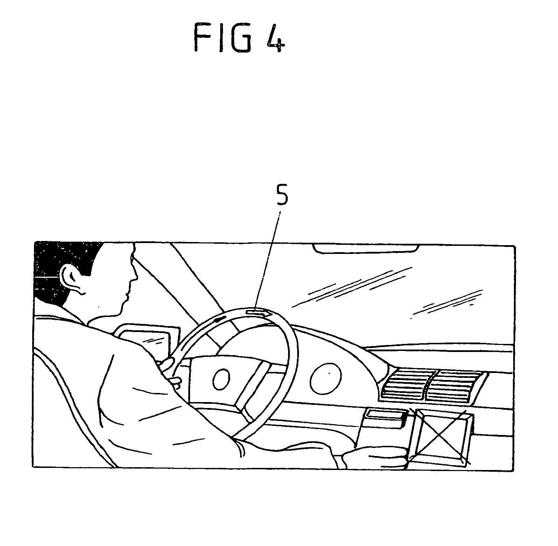

In der Fig. **4** ist nochmals die Fahrersituation bei Anordnung eines Fahrerleitsystems am Lenkrad dargestellt. Durch die Anordnung leuchtender Pfeile 5 am Lenkrad kann das Display 1 seitlich vom Fahrer entfallen. Der leuchtende Pfeil kann vom Fahrer wahrgenommen werden, ohne dass er die Beobachtung des Straßenverkehrs vernachlässigen muss. Die Anzeige dieser Information kann mit der Information eines Lenkwinkelsensors kombiniert sein.

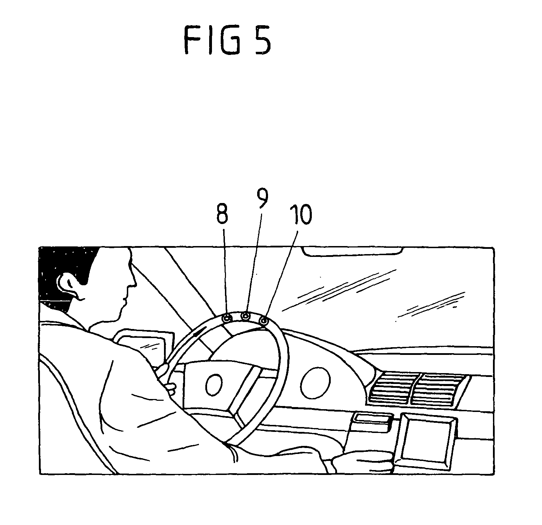

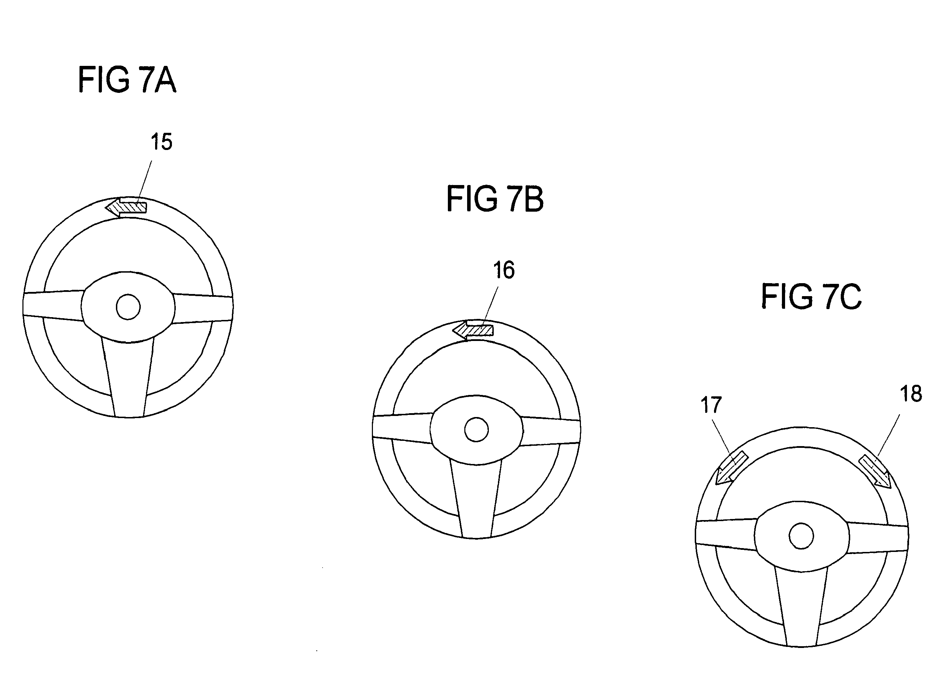

In der Fig. **5** ist die Anzeige der nächsten Ampelinformation am Lenkrad dargestellt. Hierzu ist ein rot leuchtendes Element 8, ein gelb leuchtendes Element 9 und ein grün leuchtendes Element 10 am Lenkradkranz vorgesehen. Von der Ampel wird eine Information übermittelt, ob diese rot, gelb oder grün anzeigt. Das entsprechende Element leuchtet dann am Lenkrad auf. Diese Information ist vorteilhaft, wenn die nächste Ampel, z.B. wegen einer Kurve erst kurz vor deren Erreichen sichtbar ist. Diese Anzeige ist aber auch für Ampeln sinnvoll, die bereits von weitem sichtbar sind, wenn durch eine zusätzliche Zifferanzeige am Lenkrad angegeben wird, wie lange die angezeigte Ampelphase noch andauert. Eine solche Zifferanzeige ist in der Fig. 7 nicht dargestellt.

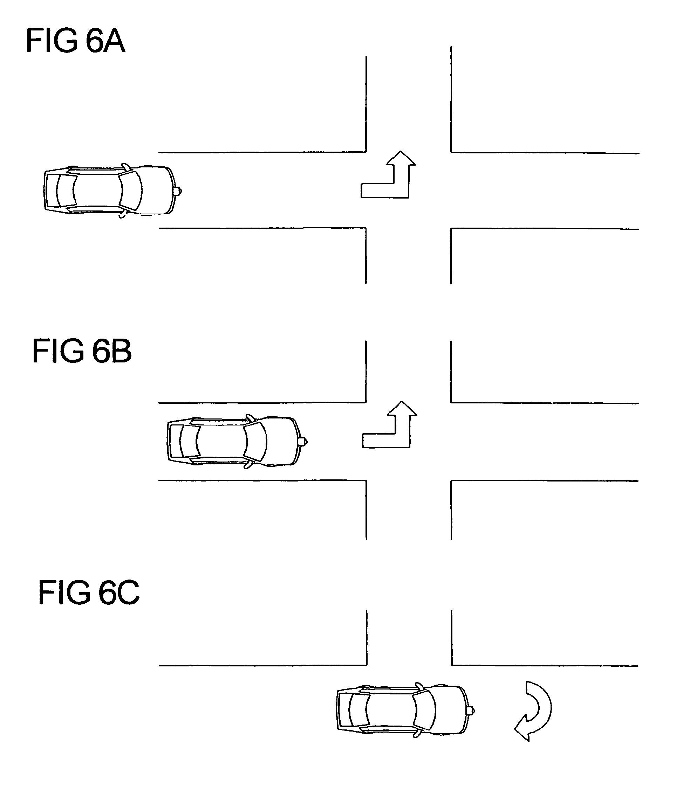

Die Figuren **7**A-C veranschaulichen die Darstellung der unterschiedlichen Fahrwegsituationen der Figuren **6**A-C. Bei Annäherung des Fahrzeugs an eine Kreuzung, an der entsprechend der Vorgabe des Fahrweg-Informationssystems die Fahrtrichtung nach links geändert werden muss (Fig. **6**A), erscheint auf dem Lenkradkranz ein grün leuchtender Pfeil 15 (Fig.**7**A). Das zeigt dem Fahrer an, dass er sich auf das Linksabbiegen vorbereiten muss. Bei weiterer Annäherung an die Kreuzung, wie in Fig. **6**B dargestellt, wechselt die Farbe des Pfeils und es ist ein rot leuchtender Pfeil 16 sichtbar, wie es durch eine andere Schraffierung in Fig. **7**B dargestellt ist. Dieser rot leuchtende Pfeil zeigt dem Fahrer, dass er nunmehr links abbiegen muss.

Wird die Notwendigkeit des Linksabbiegens vom Fahrer übersehen oder zu spät erkannt und überfährt er die Kreuzung, wie es in Fig. **6**C dargestellt ist, erteilt das Fahrweg-Informationssystem die Weisung zu wenden. Hierzu erscheinen auf dem Lenkrad zwei beleuchtete Wendepfeile 17, 18, von denen der linke Wendepfeil 17 nach links und der rechte Wendpfeil 18 nach rechts weist, wie es aus der Fig. **7**C ersichtlich ist.

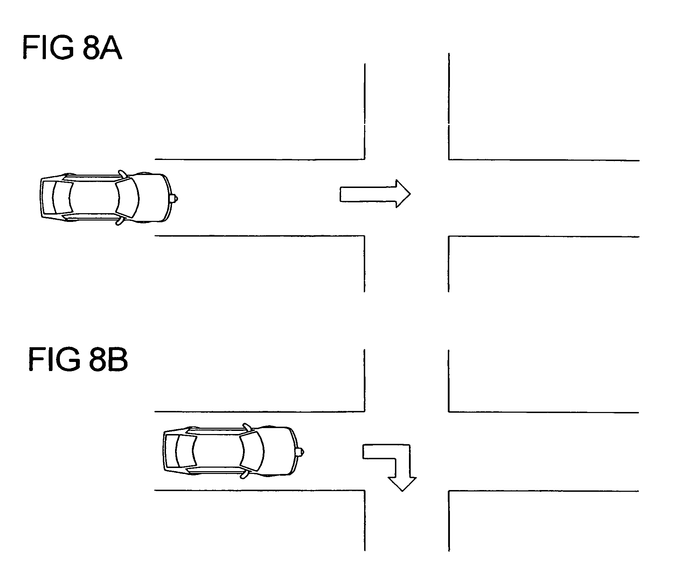

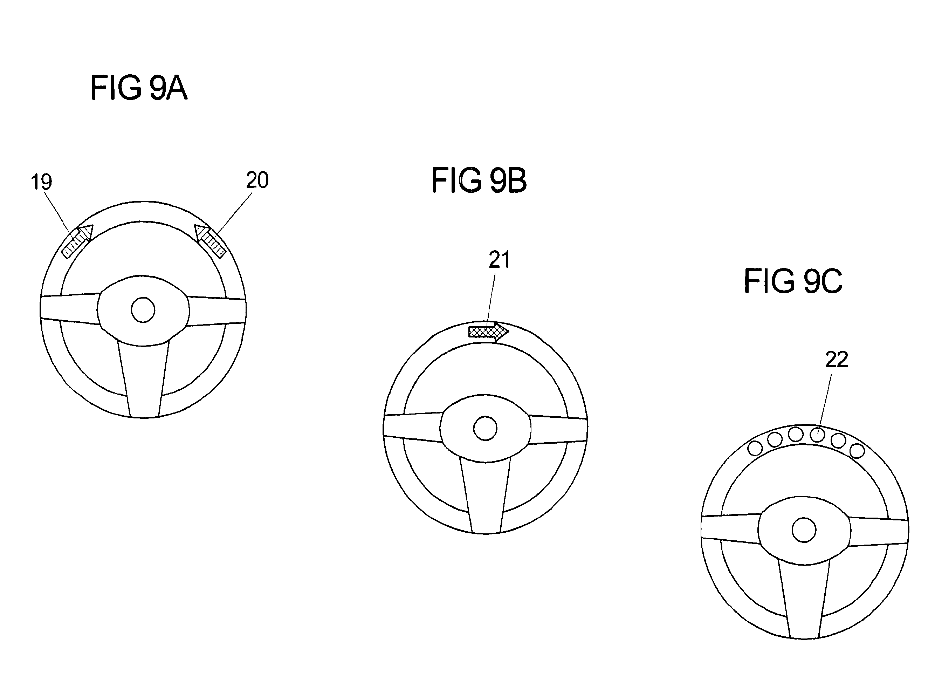

Aus der Fig. **9**A ist die Anzeige der in Fig. **8**A gezeigten, vom Fahrweg-Informationssystem vorgeschriebenen Geradeausfahrt ersichtlich. Diese wird wieder durch zwei beleuchtete Pfeile dargestellt, von denen ein linker Pfeil 19 nach rechts und ein rechter Pfeil 20 nach links weist.

In der Fig. **9**B ist die Anzeige auf dem Lenkradkranz beim vorgeschriebenen Rechtsabbiegen entsprechend der Fig. 8B dargestellt. Hierzu wird durch das Fahrweg-Informationssystem ein beleuchteter nach rechts weisender Pfeil 21 aktiviert.

Eine weitere Möglichkeit der Anzeige der vorzunehmenden Fahrtrichtungsänderung sind die in der Fig. **9**C dargestellten beleuchteten Punkte 22. Bei einer Fahrtrichtungsänderung nach rechts, entsprechend Fig. **8B** werden von der linken Seite ausgehend die Punkte aktiviert, wobei bei Aufleuchten eines Punktes der vorhergehende Punkt erlischt, so dass der Eindruck entsteht, dass sich ein beleuchteter Punkt von links nach rechts bewegt. Bei einer Fahrtrichtungsänderung nach links werden die Punkte so aktiviert, dassder Eindruck entsteht, als ob ein beleuchteter Punkt von rechts nach links wandert.

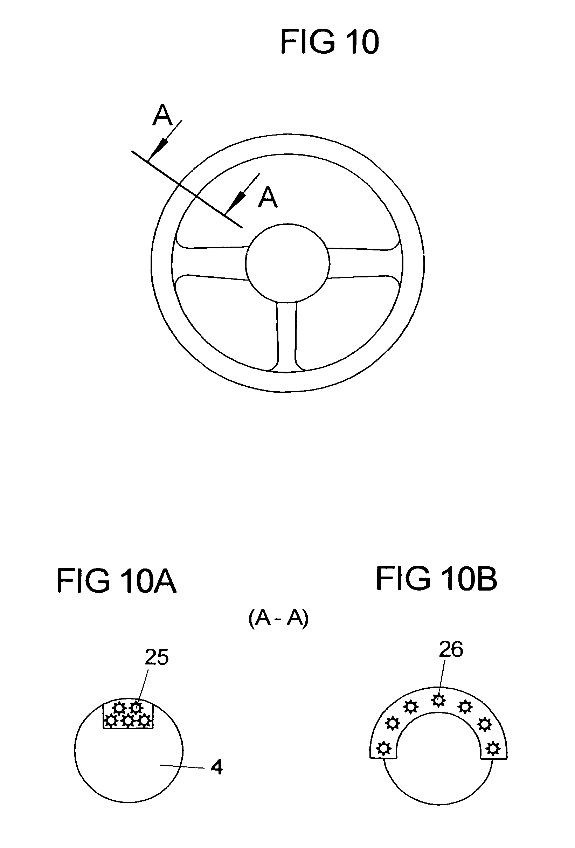

In den Figuren **10,10A-B** sind unterschiedliche Möglichkeiten der Realisierung von Leuchtelementen dargestellt.

Die Figuren **10A****,** B zeigen Schnitte A-A durch ein Lenkrad gemäß Fig. **10****.** Bei der Ausführungsform der Fig. **10A** sind im Lenkradkranz 4 Leuchtelemente 25, z. B. LED-Elemente, in einem im Querschnitt kleinen Bereich im Lenkradkranz angeordnet. Die Leuchtelemente können mehrere Farben emittieren und werden entsprechend den Signalen des Fahrweg-Informationssystems oder der Empfangsanlagen zur Erfassung von Gefahrensituationen gleichzeitig oder nacheinander aktiviert.

Die Fig. **10B** zeigt eine Ausführungsform, bei der Leuchtelemente 26 auf der gesamten dem Insassen zugewandten Seite des Lenkradkranzes angeordnet sind, die in gleicher Weise angesteuert werden wie die Leuchtelemente 25.

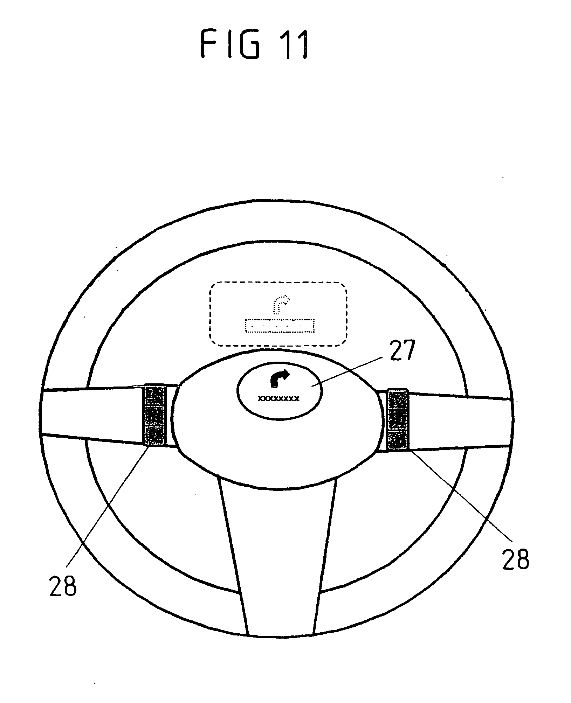

In der Fig. **11** ist ein Lenkrad dargestellt, das mit einem Display 27 zur Anzeige von Symbolen und alphanumerischen Zeichen sowie Schaltern 28 ausgestattet ist. Das Display 27 kann z.B. als Telefondisplay dienen und Anrufer sowie die gewählte Nummer anzeigen. Die alphanumerischen Zeichen können so angesteuert werden, dass die Anzeige im Display 27 die in der Fig. **11** dargestellte Lage unabhängig von der Drehung des Lenkrades beibehält. Das Display kann in Verbindung mit den Schaltern auch der Eingabe von Informationen für das Navigationssystem und deren Anzeige sowie zur Anzeige von Rückmeldungen vom Navigationssystem während des Fahrbetriebes dienen. Aus Sicherheitsgründen kann es zweckmäßig sein, dass bestimmte Funktionen nur in der Parkposition bedient werden können.

Für die Ansteuerung der am Lenkrad angeordneten Elemente werden an sich bekannte Schaltungen verwendet.

## Patentansprüche

1. Lenkrad für Kraftfahrzeuge mit Fahrerleitsystem, wobei das Lenkrad als Kommunikations-Interface für den Fahrer ausgebildet ist,
**dadurch gekennzeichnet, dass** als Anzeigeelemente für das Fahrerleitsystem für die empfohlene Fahrtrichtung Pfeile (5, 15-21) oder bewegte Punkte (7, 22), die nacheinander beleuchtet werden, auf dem Lenkradkranz vorgesehen sind.

2. Lenkrad nach Anspruch 1, **dadurch gekennzeichnet, dass** die Pfeile (5, 15-21) oder Punkte (7, 22) in Abhängigkeit vom Abstand zum Ort einer Fahrrichtungsänderung so ansteuerbar sind, dass sie unterschiedlich stark leuchten oder unterschiedliche Farben aufweisen.

3. Lenkrad nach Anspruch 1 oder 2, **dadurch gekennzeichnet, dass** die Pfeile (5, 15-21) oder Punkte (7, 22) bei Erreichen des Orts der Fahrtrichtungsänderung so angesteuert sind, dass sie blinken.

4. Lenkrad nach mindestens einem der Ansprüche 1 bis 3, **dadurch gekennzeichnet, dass** die Pfeile (5, 15-21) oder Punkte (7, 22) bei Annäherung an den Ort der Fahrtrichtungsänderung ihre Farbe von grün auf rot verändern.

5. Lenkrad nach mindestens einem der vorhergehenden Ansprüche, **dadurch gekennzeichnet, dass** zur Anzeige der nächsten Verkehrsampel-Information der Verkehrsampel entsprechende Farbelemente (8, 9, 10) vorgesehen sind.

6. Lenkrad nach Anspruch 5, **dadurch gekennzeichnet, dass** eine Ziffernanzeige im Lenkrad vorgesehen ist, die den Zeitraum bis zum nächsten Wechsel der Ampelanzeige angibt.

7. Lenkrad nach mindestens einem der vorhergehenden Ansprüche, **dadurch gekennzeichnet, dass** Warnfunktionen durch Veränderung der Farben und/oder der Strahlungsintensität der Leuchtelemente (2, 5, 6-10, 15-22, 25, 26) und/oder durch Blinken der Leuchtelemente (2, 5, 6-10, 15-22, 25, 26) darstellbar sind.

8. Lenkrad nach mindestens einem der vorhergehenden Ansprüche, **dadurch gekennzeichnet, dass** Schalter (28) am Lenkrad für die Eingabe von Informationen für das Navigationssystem und deren Anzeige sowie für ein Telefon vorgesehen sind.

## Claims

1. Steering wheel for motor vehicles having a driver guidance system, the steering wheel being embodied as a communications interface for the driver, **characterized in that** arrows (5, 15-21) or moving points (7, 22) which are illuminated successively are provided on the steering wheel rim as display elements for the recommended direction of travel for the driver guidance system.

2. Steering wheel according to claim 1, **characterized in that** the arrows (5, 15-21) or points (7, 22) can be actuated as a function of the distance from the location of a change in direction of travel in such a way that they light up to different degrees or have different colors.

3. Steering wheel according to claim 1 or 2,
**characterized in that** when the location of the change in direction of travel is reached the arrows (5, 15-21) or points (7, 22) are actuated in such a way that they flash.

4. Steering wheel according to at least one of claims 1 to 3, **characterized in that** the arrows (5, 15-21) or points (7, 22) change their color from green to red when the location of the change in direction of travel is approached.

5. Steering wheel according to at least one of the preceding claims, **characterized in that** color elements (8, 9, 10) which correspond to the traffic lights are provided for displaying the next item of traffic light information.

6. Steering wheel according to claim 5, **characterized in that** a numerical display in the steering wheel which indicates the period of time until the traffic light display changes next is provided.

7. Steering wheel according to at least one of the preceding claims, **characterized in that** warning functions can be represented by changing the colors and/or the radiation intensity of the light elements (2, 5, 6-10, 15-22, 25, 26) and/or by flashing the light elements (2, 5, 6-10, 15-22, 25, 26).

8. Steering wheel according to at least one of the preceding claims, **characterized in that** switches (28) are provided on the steering wheel for inputting information for the navigation system and displaying it as well as for a telephone.

## Revendications

1. Volant de direction pour véhicules automobiles comprenant un système de guidage du conducteur, dans lequel le volant de direction est réalisé sous forme d'interface de communication pour le conducteur, **caractérisé en ce que,** à titre d'éléments d'affichage pour le système de guidage du conducteur, il est prévu sur la jante du volant de direction des flèches (5, 15-21) ou des points en mouvement (7, 22), qui sont éclairés les uns après les autres, pour la direction de déplacement recommandée.

2. Volant de direction pour selon la revendication 1, **caractérisé en ce que** les flèches (5, 15-21) ou les points (7, 22) peuvent être piloté(e)s en fonction de la distance par rapport à l'emplacement d'un changement de direction de déplacement, de telle façon qu'ils/elles sont illuminé(e)s avec une intensité différente ou présentent des couleurs différentes.

3. Volant de direction selon la revendication 1 ou 2, **caractérisé en ce que** les flèches (5, 15-21) ou les points (7, 22) sont piloté(e)s de telle manière qu'ils/elles clignotent lorsque le lieu du changement de direction de déplacement est atteint.

4. Volant de direction selon l'une au moins des revendications 1 à 3, **caractérisé en ce que** les flèches (5, 15-21) ou les points (7,22) modifient leurs couleurs de vert à rouge lors d'un rapprochement vers le lieu du changement de direction de déplacement.

5. Volant de direction selon l'une au moins des revendications précédentes, **caractérisé en ce que,** pour indiquer les informations concernant les prochains feux de circulation, il est prévu des éléments de couleur correspondants (8, 9, 10).

6. Volant de direction selon la revendication 5, **caractérisé en ce qu'**il est prévu un affichage à chiffres dans le volant de direction, qui indique le temps jusqu'au prochain changement de l'indication des feux de circulation.

7. Volant de direction selon l'une au moins des revendications précédentes, **caractérisé en ce que** des fonctions d'avertissement sont susceptibles d'être représentées par modification des couleurs et/ou de l'intensité de rayonnement des éléments lumineux (2, 5, 6-10, 15-22, 25, 26) et/ou par clignotement des éléments lumineux (2, 5, 6-10, 15-22, 25, 26).

8. Volant de direction selon l'une au moins des revendications précédentes, **caractérisé en ce qu'**il est prévu des commutateurs (28) sur le volant de direction pour la saisie d'informations pour le système de navigation et son affichage, ainsi que pour un téléphone.
